# EUROPÄISCHE PATENTSCHRIFT

(11) **EP 4 299 234 B1**
(45) Veröffentlichungstag und Bekanntmachung des Hinweises auf die Patenterteilung: **21.10.2026**
(21) Anmeldenummer: 22181987.3
(22) Anmeldetag: 29.06.2022
(51) Int. Cl.: B23K 26/12, B23K 26/38, B23K 26/08, B23K 37/02, B23K 35/38

(54) **VORRICHTUNG UND VERFAHREN ZUR LASERBEARBEITUNG EINES WERKSTÜCKS**
DEVICE AND METHOD FOR LASER PROCESSING A WORKPIECE
DISPOSITIF ET PROCÉDÉ D'USINAGE LASER D'UNE PIÈCE

(43) Veröffentlichungstag der Anmeldung: 03.01.2024
(73) Patentinhaber: Bystronic Laser AG, 3362 Niederönz (CH)
(72) Erfinder: Binggeli, René, 4932 Lotzwil (CH)
(74) Vertreter: Fink Numrich Patentanwälte PartmbB

(56) Entgegenhaltungen:
- WO-A1-2017/154669
- JP-A- 2007 313 545
- JP-A- 2011 212 709
- JP-A- H11 277 287

## Beschreibung

Die Erfindung betrifft eine Vorrichtung und ein Verfahren zur Laserbearbeitung eines Werkstücks, siehe Ansprüche 1 und 12.

Zur Laserbearbeitung von Werkstücken, wie z.B. metallischen Blechen, werden Laserbearbeitungsmaschinen genutzt, die einen Laserstrahl mittels eines beweglichen Laserbearbeitungskopfs auf das Werkstück richten und hierdurch ein Schmelzen bzw. Verbrennen des Materials des Werkstücks bewirken. Auf diese Weise können z.B. vorgegebene Konturen aus dem Werkstück ausgeschnitten werden.

In der Regel wird während der Laserbearbeitung über einen Gaseinlass am Laserbearbeitungskopf ein Bearbeitungsgas unter Druck am Werkstück eingeleitet, um hierdurch die durch den Laserstrahl erzeuge Schmelze bzw. Schlacke abzuleiten. Je nach Material des Werkstücks bzw. seiner Dicke können unterschiedliche Bearbeitungsgase genutzt werden. Oftmals wird ein Mischgas verwendet, das Stickstoff und Sauerstoff beinhaltet. Das Mischverhältnis des Mischgases wird in Abhängigkeit von der verwendeten Laserleistung bzw. des Materials des Werkstücks geeignet eingestellt. Bei höheren Laserleistungen, mit denen in der Regel dickere Werkstücke bearbeitet werden, ist es zur Erreichung einer guten Bearbeitungsqualität des Werkstücks wünschenswert, dass der Anteil an Sauerstoff in dem Mischgas gering ist.

In herkömmlichen Vorrichtungen zur Laserbearbeitung wird das Mischgas mittels einer Mischeinrichtung gemischt, der direkt aus entsprechenden Reservoirs reiner Stickstoff und reiner Sauerstoff zugeführt wird. Dabei besteht das Problem, dass Mischverhältnisse des Mischgases mit geringem Sauerstoffanteil, wie z.B. von 0,5 % oder weniger, nicht einstellbar sind, jedoch für eine Laserbearbeitung mittels hoher Laserleistung zur prozesssicheren Durchführung der Laserbearbeitung erwünscht sind.

JP 2007 313545 A offenbart eine Vorrichtung zur Zufuhr von Hilfsgas für eine Laserbearbeitungsmaschine, wobei in einer Mischeinrichtung Druckluft aus einer Druckluftzufuhrquelle zum Antrieb der Laserbearbeitungsmaschine mit dem Hilfsgas aus einer Hilfsgaszufuhrquelle gemischt wird.

Die Druckschrift WO 2017/154669 A1 offenbart eine Laserschneidmaschine mit einem Laserschneidkopf, dem während der Laserbearbeitung eines Werkstücks über eine Gaszufuhreinrichtung ein Mischgas zugeführt wird, das in einer Mischeinrichtung aus Stickstoff und Druckluft gemischt wird.

In dem Dokument JP H11 277287 A ist eine Laserschneidmaschine mit einem Laserschneidkopf gezeigt, dem während der Laserbearbeitung eines Werkstücks Stickstoff zugeführt wird, der aus einem Stickstoffgenerator stammt und dessen Druck in einer Druckerhöhungseinheit erhöht wird. Die Druckerhöhungseinheit wird mittels Druckluft aus einem Druckluftkompressor angetrieben.

Das Dokument JP 2011 212709 A zeigt einen Laserschneidkopf, dem über eine Mischeinrichtung ein Mischgas aus Sauerstoff oder Druckluft, Stickstoff und Argon zugeführt werden kann.

Aufgabe der Erfindung ist es, eine verbesserte Vorrichtung und ein verbessertes Verfahren zur Laserbearbeitung eines Werkstücks zu schaffen, insbesondere eine verbesserte Vorrichtung und ein verbessertes Verfahren, mit denen Mischgas mit einem geringen Anteil an Sauerstoff als Bearbeitungsgas genutzt werden kann.

Diese Aufgabe wird durch die Vorrichtung gemäß Patentanspruch 1 bzw. das Verfahren gemäß Patentanspruch 12 gelöst. Weiterbildungen der Erfindung sind in den abhängigen Ansprüchen definiert.

Die erfindungsgemäße Vorrichtung dient zur Laserbearbeitung eines Werkstücks (siehe Anspruch 1), und wird in einer bevorzugten Variante zum Laserschneiden des Werkstücks genutzt. Die Vorrichtung beinhaltet eine Laserbearbeitungsmaschine, die in einem Laserbearbeitungsbereich einen bewegbaren Laserbearbeitungskopf enthält, um die Laserbearbeitung des Werkstücks im Laserbearbeitungsbereich durch Richten eines Laserstrahls auf das Werkstück durchzuführen. Der Laserbearbeitungskopf umfasst einen Gaseinlass, um in einem Mischgasbetriebsmodus ein Gas beinhaltend Stickstoff und Sauerstoff während der Laserbearbeitung als Bearbeitungsgas am Werkstück einzuleiten.

Der Gaseinlass ist mit einer Gaszufuhreinrichtung verbunden, die Bestandteil der erfindungsgemäßen Vorrichtung ist. Die Gaszufuhreinrichtung umfasst eine Mischeinrichtung, die dazu konfiguriert ist, im Mischgasbetriebsmodus das Mischgas aus zumindest zwei Reservoirs umfassend ein erstes Reservoir befüllt mit komprimiertem Stickstoff und ein zweites Reservoir befüllt mit komprimierter Druckluft zu mischen. Insbesondere enthält das erste Reservoir ausschließlich im Wesentlichen reinen Stickstoff und das zweite Reservoir beinhaltet ausschließlich Druckluft.

Die erfindungsgemäße Vorrichtung umfasst einen Generator, der zum Betrieb in einem Betriebsmodus eingerichtet ist, in dem der Generator aus Umgebungsluft komprimierte Druckluft generiert und dem zweiten Reservoir zuführt. Die erfindungsgemäße Vorrichtung kann somit die benötigte komprimierte Druckluft selbst erzeugen.

Es ist in diesem Fall nicht mehr erforderlich, das entsprechende Druckluft-Reservoir bei Entleerung zu tauschen.

Ferner ist der Generator in der erfindungsgemäßen Vorrichtung auch zu einem Betrieb in einem weiteren Betriebsmodus eingerichtet, in dem der Generator aus Umgebungsluft komprimierten Stickstoff generiert und dem ersten Reservoir zuführt. Auf diese Weise kann auch der Stickstoff des Mischgases durch die Vorrichtung selbst erzeugt werden, so dass es nicht erforderlich ist, einen Tausch des Stickstoff-Reservoirs bei dessen Entleerung durchzuführen.

Die erfindungsgemäße Vorrichtung zeichnet sich dadurch aus, dass anstatt eines Sauerstoff-Reservoirs ein Druckluft-Reservoir als zweites Reservoir genutzt wird. In einem Druckluft-Reservoir liegt der Anteil an Sauerstoff bei in etwa 21%. Dies hat zur Folge, dass bei der Gasmischung über die Mischeinrichtung durch die Zufuhr der Druckluft wesentlich weniger Sauerstoff in die Mischeinrichtung gelangt. Auf diese Weise kann ein Mischgasbetrieb mit einem Mischgas erreicht werden, dessen Anteil an Sauerstoff wesentlich geringer als in herkömmlichen Vorrichtungen ist. Je nach Ausgestaltung der erfindungsgemäßen Vorrichtung können die Gasdrücke in dem ersten und zweiten Reservoir unterschiedlich eingestellt sein. Vorzugsweise liegen die Gasdrücke zwischen 5 bar und 50 bar und insbesondere bei in etwa 40 bar.

In einer bevorzugten Ausführungsform der erfindungsgemäßen Vorrichtung ist der Laserbearbeitungsbereich, d.h. der Bereich, in dem die Laserbearbeitung erfolgt, von einem Gehäuse umgeben. Mit anderen Worten bildet das Innere des Gehäuses den Laserbearbeitungsbereich.

Der Mischgasbetrieb der erfindungsgemäßen Vorrichtung kann der einzige Betriebsmodus der Vorrichtung sein. Gegebenenfalls kann die Vorrichtung jedoch auch Betriebsmodi für eine Laserbearbeitung mit anderen Gasen umfassen, wie weiter unten noch näher erläutert wird. Insbesondere kann die Gaszufuhreinrichtung in einer bevorzugten Variante auch dazu konfiguriert sein, in einem Druckluft-Betriebsmodus ausschließlich komprimierte Druckluft aus dem zweiten Reservoir dem Gaseinlass zuzuführen. Vorzugsweise wird dies dadurch erreicht, dass die komprimierte Druckluft aus dem zweiten Reservoir an der Mischeinrichtung vorbeigeführt wird, so dass keine Gasmischung erfolgt und am Gasauslass anstatt von Mischgas nur komprimierte Druckluft anliegt.

In einer besonders bevorzugten Ausführungsform der erfindungsgemäßen Vorrichtung ist die Mischeinrichtung derart betreibbar, dass das Mischverhältnis des Mischgases im Mischgasbetriebsmodus einen Anteil von 0,5 % oder weniger, vorzugsweise von 0,2 % oder weniger, besonders bevorzugt von 0,1 % oder weniger, an Sauerstoff enthält. Mit dieser Ausführungsform können Mischverhältnisse des Mischgases mit sehr geringem Sauerstoffanteil erreicht werden, die für Laserbearbeitungsprozesse mit hohen Laserleistungen zur Erreichung einer guten Bearbeitungsqualität erwünscht sind.

In einer weiteren bevorzugten Variante der erfindungsgemäßen Vorrichtung ist das Mischverhältnis des Mischgases mittels der Mischeinrichtung einstellbar. Hierzu kann beispielsweise eine Benutzerschnittstelle vorgesehen sein, mit dem ein Bediener das erwünschte Verhältnis geeignet festlegt. Gegebenenfalls ist es auch möglich, dass das Mischverhältnis durch die Mischeinrichtung automatisch in Abhängigkeit von den Parametern der Laserbearbeitung eingestellt wird. Beispielsweise kann das Mischverhältnis in Abhängigkeit von den Konturbereichen des Werkstücks und/oder des Bearbeitungsprozesses, z.B. Einstechen oder Schneiden, gewählt werden.

In einer weiteren bevorzugten Variante der erfindungsgemäßen Vorrichtung ist die Mischeinrichtung derart betreibbar, dass im Mischgasbetriebsmodus zumindest ein weiteres Gas neben Stickstoff und Druckluft aus zumindest einem dritten Reservoir dem Mischgas beigemischt wird. Die Beimischung eines solchen weiteren Gases zu dem Mischgas ist dabei an sich bekannt. Oftmals wird als weiteres Gas ein Inertgas, wie z.B. Argon, zugemischt.

In einer weiteren bevorzugten Variante der erfindungsgemäßen Vorrichtung ist die Mischeinrichtung im Laserbearbeitungsbereich angeordnet, vorzugsweise innerhalb eines Gehäuses, das den Laserbearbeitungsbereich umgibt. Hierdurch kann eine kompakte Integration der Mischeinrichtung in die Laserbearbeitungsmaschine der erfindungsgemäßen Vorrichtung erreicht werden. Nichtsdestotrotz ist es in einer weiteren Variante auch möglich, dass die Mischeinrichtung außerhalb des Laserbearbeitungsbereichs angeordnet ist, vorzugsweise außerhalb eines Gehäuses, das den Laserbearbeitungsbereich umgibt. Mit dieser Variante wird eine gute Zugänglichkeit zu der Mischeinrichtung, z.B. im Falle von Fehlfunktionen oder Defekten, sichergestellt.

In einer weiteren bevorzugten Ausführungsform umfasst die Gaszufuhreinrichtung eine Einstelleinheit, um den Druck des Mischgases am Gaseinlass einzustellen. Im Falle, dass die erfindungsgemäße Vorrichtung auch in anderen Betriebsmodi als dem Mischgasbetriebsmodus betreibbar ist, kann die Einstelleinheit ggf. auch den Druck von anderen Bearbeitungsgasen am Gaseinlass bzw. an separaten Gaseinlässen einstellen. Ferner kann der Einstelleinheit in einer weiteren Variante der erfindungsgemäßen Vorrichtung eine Vorreguliereinheit vorgeschaltet sein, um den an der Einstelleinheit anliegenden Druck des Mischgases und ggf. auch anderen Bearbeitungsgase zu reduzieren.

In einer weiteren bevorzugten Variante ist die Einstelleinheit benachbart zum Laserbearbeitungskopf angeordnet und mit diesem bewegbar. Hierdurch kann die Einstelleinheit kompakt in die Laserbearbeitungsmaschine integriert werden.

In einer weiteren Variante der erfindungsgemäßen Vorrichtung ist die Mischeinrichtung in der Einstelleinheit integriert, wobei in diesem Fall die Einstelleinheit vorzugsweise benachbart zum Laserbearbeitungskopf angeordnet ist und mit diesem bewegbar ist. Mit dieser Ausführungsform können Komponenten der Mischeinrichtung und der Einstelleinheit gemeinsam genutzt werden und hierdurch Bauteile eingespart werden.

In einer weiteren Variante ist die erfindungsgemäße Vorrichtung dazu konfiguriert, in einem oder mehreren anderen Betriebsmodi als dem Mischgasbetriebsmodus betrieben zu werden, wobei in einem jeweiligen anderen Betriebsmodus als Bearbeitungsgas ausschließlich ein anderes Gas als das Mischgas über den Gaseinlass bzw. ggf. auch über einen anderen Gaseinlass am Laserbearbeitungskopf am Werkstück eingeleitet wird. Diese Ausführungsform ermöglicht eine Laserbearbeitung nicht nur mit Mischgas, sondern auch mit anderen Gasen.

Vorzugsweise umfassen der oder die anderen Betriebsmodi einen Betriebsmodus zum Einleiten von Stickstoff als Bearbeitungsgas aus dem ersten Reservoir am Werkstück und/oder einen Betriebsmodus zum Einleiten von Druckluft als Bearbeitungsgas aus dem zweiten Reservoir am Werkstück und/oder einen Betriebsmodus zum Einleiten von Sauerstoff als Bearbeitungsgas aus einem Sauerstoff-Reservoir am Werkstück.

Die Erfindung betrifft darüber hinaus ein Verfahren zur Laserbearbeitung eines Werkstücks, insbesondere zum Laserschneiden eines Werkstücks (siehe Anspruch 12), bei dem in einem Laserbearbeitungsbereich ein bewegbarer Laserbearbeitungskopf einer Laserbearbeitungsmaschine die Laserbearbeitung des Werkstücks durch Richten eines Laserstrahls auf das Werkstück durchführt. Dabei wird in einem Mischgasbetriebsmodus über einen Gaseinlass des Laserbearbeitungskopfs ein Mischgas beinhaltend Stickstoff und Sauerstoff während der Laserbearbeitung als Bearbeitungsgas am Werkstück eingeleitet. In diesem Mischgasbetriebsmodus wird mittels einer Mischeinrichtung, die Bestandteil einer mit dem Gaseinlass verbundenen Gaszufuhreinrichtung ist, das Mischgas aus zumindest zwei Reservoir gemischt, wobei die zumindest zwei Reservoirs ein erstes Reservoir befüllt mit komprimiertem Stickstoff und ein zweites Reservoir befüllt mit komprimierter Druckluft umfassen.

Das erfindungsgemäße Verfahren wird mit der erfindungsgemäßen Vorrichtung bzw. einer oder mehrerer bevorzugter Varianten der erfindungsgemäßen Vorrichtung durchgeführt.

Mit dem erfindungsgemäßen Verfahren werden die gleichen Vorteile wie mit der erfindungsgemäßen Vorrichtung erreicht. Insbesondere können durch die Verwendung von komprimierter Druckluft Mischverhältnisse des Mischgases erreicht werden, die sehr wenig Anteil an Sauerstoff enthalten.

Ausführungsbeispiele der Erfindung werden nachfolgend anhand der beigefügten Figuren detailliert beschrieben.

Es zeigen:
- Fig. 1: eine perspektivische schematische Darstellung einer Laserbearbeitungsmaschine, die in einer Ausführungsform der erfindungsgemäßen Vorrichtung verwendet wird;
- Fig. 2 bis Fig. 4: schematische Darstellungen, welche drei unterschiedliche Ausführungsformen einer erfindungsgemäßen Vorrichtung zur Laserbearbeitung wiedergeben.

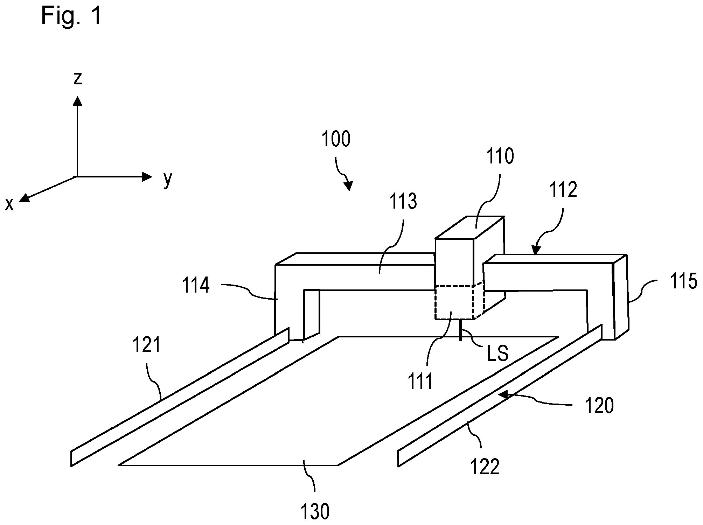

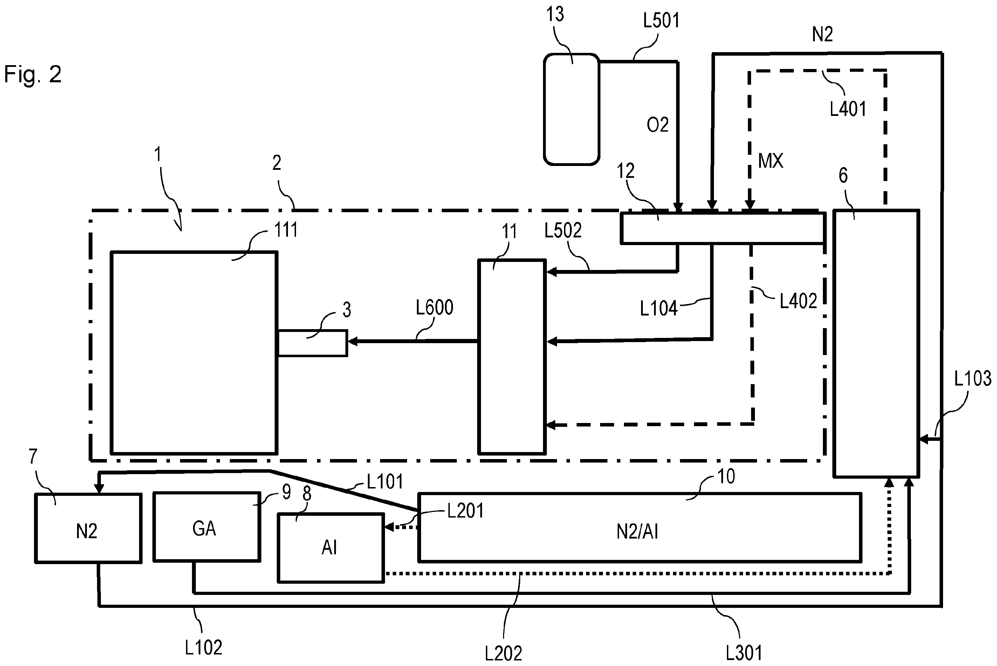

Fig. 1 zeigt beispielhaft eine Laserbearbeitungsmaschine 100, die in den weiter unten beschriebenen Ausführungsformen der Fig. 2 bis Fig. 4 zur Laserbearbeitung von Werkstücken zum Einsatz kommt. Die räumliche Ausrichtung der Laserbearbeitungsmaschine ist durch ein kartesisches Koordinatensystem verdeutlicht. Dessen horizontale x-Richtung bzw. erste Richtung repräsentiert die Längsrichtung der Laserbearbeitungsmaschine, dessen horizontale y-Richtung bzw. zweite Richtung repräsentiert die Querrichtung der Laserbearbeitungsmaschine und dessen vertikale z-Richtung bzw. dritte Richtung repräsentiert die Höhenrichtung der Laserbearbeitungsmaschine.

Die Laserbearbeitungsmaschine 100 umfasst einen in y-Richtung verfahrbaren Wagen 110 in der Form eines Schneidwagens. An diesem verfahrbaren Wagen 110 ist ein Laserbearbeitungskopf 111 in der Form eines Laserschneidkopfs angebracht, der durch einen gestrichelten Umriss in Fig. 1 hervorgehoben ist. Über den Laserbearbeitungskopf 111 wird ein Laserstrahl LS auf ein Werkstück 130 in der Form eines metallischen Blechs gerichtet, wobei der Laserstrahl LS in der hier beschriebenen Ausführungsform zum Ausschneiden vorbestimmter Konturen aus dem Werkstück 130 dient. Das Werkstück 130 befindet sich in einer horizontalen Ebene, die durch die x-Richtung und die y-Richtung des kartesischen Koordinatensystems aufgespannt ist. Die Laserbearbeitungsmaschine 100 ist innerhalb eines Gehäuses 2 angeordnet, das nicht aus Fig. 1 ersichtlich ist, jedoch schematisch in Fig. 2 bis Fig. 4 wiedergegeben ist. Das Innere des Gehäuses 2 bildet einen Laserbearbeitungsbereich 1, der wiederum nicht aus Fig. 1 ersichtlich ist, jedoch in Fig. 2 bis Fig. 4 angedeutet ist. Der Laserbearbeitungsbereich 1 ist ein Raumbereich, in dem die Laserbearbeitung des Werkstücks 130 stattfindet.

Der verfahrbare Wagen 110 ist auf einer Brücke 112 angeordnet. Die Brücke 112 umfasst eine in y-Richtung verlaufende Traverse 113, an deren jeweiligen Enden sich vertikal erstreckende Brückenfüße 114 und 115 anschließen. Der verfahrbare Wagen 110 ist zusammen mit dem Laserbearbeitungskopf 111 mittels einer nicht gezeigten Aktorik entlang der Traverse 113, d.h. in y-Richtung, während der Bearbeitung des Werkstücks 130 bewegbar. Die Brücke 112 ist auf einem Maschinenrahmen 120 mit den beiden, sich in die x-Richtung erstreckenden Führungen 121 und 122 angeordnet. Die Brücke ist dabei entlang dieser Führungen während der Laserbearbeitung des Werkstücks 130 in x-Richtung mittels einer nicht dargestellten Aktorik verfahrbar. Somit kann der Laserbearbeitungskopf 111 und hierdurch der Laserstrahl LS in y-Richtung durch Bewegen des verfahrbaren Wagens 110 und in x-Richtung durch Bewegen der Brücke 112 verfahren werden, so dass beliebige Konturen aus dem Werkstück 130 durch den Laserstrahl LS ausgeschnitten werden können. Der Laserbearbeitungskopf 111 kann ferner durch eine nicht dargestellte Aktorik relativ zum verfahrbaren Wagen 110 in der Höhenrichtung (d.h. der z-Richtung) verfahren werden.

Während der Laserbearbeitung des Werkstücks 130 mittels des Laserstrahls LS wird gleichzeitig über einen Gaseinlass ein unter Druck stehendes Bearbeitungsgas dem Laserbearbeitungskopf 111 zugeführt. Das Bearbeitungsgas tritt in der Umgebung des Laserstrahls aus dem Laserbearbeitungskopf 111 aus und ist auf das Werkstück 130 gerichtet. Mittels des Bearbeitungsgases wird bei der Laserbearbeitung auftretende Schmelze bzw. Schlacke abgeführt. Die Zuführung des Gases bzw. der Gaseinlass sind aus Übersichtlichkeitsgründen nicht in Fig. 1 dargestellt. Der Gaseinlass ist jedoch schematisch in den weiter unten beschriebenen Fig. 2 bis Fig. 4 wiedergegeben und dort mit Bezugszeichen 3 bezeichnet.

Je nach Material und Dicke des bearbeiteten Werkstücks können unterschiedliche Bearbeitungsgase bzw. Gasmischungen zugeführt werden. Beim sog. Laserbrennschneiden wird reiner Sauerstoff zugeführt. Demgegenüber wird beim sog. Laserschmelzschneiden häufig reiner Stickstoff oder ein Mischgas beinhaltend Stickstoff und Sauerstoff, ggf. mit weiteren Gasanteilen, verwendet. Die Drücke der jeweils zugeführten Bearbeitungsgase liegen in der Regel im Bereich zwischen 0,5 bar und 24 bar und können je nach Anwendungsfall variiert werden.

Fig. 2 bis Fig. 4 zeigen drei Varianten des Gesamtaufbaus einer Vorrichtung zur Laserbearbeitung, die als einen Bestandteil die Laserbearbeitungsmaschine 100 aus Fig. 1 enthält. Von der Laserbearbeitungsmaschine 100 ist dabei nur der Laserbearbeitungskopf 111 gezeigt. Die Ausführungsformen der Fig. 2 bis Fig. 4 unterscheiden sich gegenüber dem Stand der Technik im sog. Mischgasbetriebsmodus, bei dem die Laserbearbeitung mittels der Laserbearbeitungsmaschine 100 über ein Mischgas beinhaltend Stickstoff und Sauerstoff durchgeführt wird.

In herkömmlichen Vorrichtungen wird im Mischgasbetrieb reiner Stickstoff und reiner Sauerstoff aus entsprechenden Reservoirs über eine Mischeinrichtung gemischt. Dies hat jedoch den Nachteil, dass mit der Mischeinrichtung keine Mischverhältnisse des Mischgases mit einem Sauerstoffanteil von 0,5 % oder weniger erreicht werden können. Für eine gute Schneidqualität ist es jedoch oftmals wünschenswert, den Anteil von Sauerstoff auf unter 0,5 % zu verringern. Insbesondere wird für eine gute Schneidqualität umso weniger Sauerstoff benötigt, je dicker das Werkstück ist. Da für das Schneiden von dickeren Werkstücken mehr Laserleistung benötigt wird, brauchen somit Laserbearbeitungen mit höherer Laserleistung einen geringeren Anteil an Sauerstoff im Mischgas. Um ein Mischverhältnis des Mischgases mit einem Sauerstoffanteil von 0,5% oder weniger zu ermöglichen, wird in den hier beschriebenen Ausführungsformen das Mischgas unter Verwendung von Druckluft anstatt von reinem Sauerstoff generiert, wie im Folgenden näher erläutert wird.

Fig. 2 zeigt eine erste Ausführungsform einer erfindungsgemäßen Vorrichtung. Wie oben dargelegt, enthält die Vorrichtung die Laserbearbeitungsmaschine 100, von welcher der Laserbearbeitungskopf 111 schematisch wiedergegeben ist. Die Laserbearbeitungsmaschine befindet sich innerhalb des Gehäuses 2, das den Laserbearbeitungsbereich 1 umgibt. Am Laserbearbeitungskopf 111 ist der Gaseinlass 3 vorgesehen, über den je nach Betriebsmodus der Vorrichtung Mischgas beinhaltend Stickstoff und Sauerstoff bzw. reiner Sauerstoff bzw. reiner Stickstoff bzw. ausschließlich Druckluft für die entsprechende Laserbearbeitung zugeführt werden kann.

Die Vorrichtung der Fig. 2 umfasst ein Reservoir bzw. einen Tank 7, der mit reinem Stickstoff (N2) gefüllt ist, ein Reservoir bzw. einen Tank 8, der mit Druckluft (AI) gefüllt ist, sowie ein Reservoir bzw. einen Tank 9, der mit einem dritten Gas (GA), im vorliegenden Fall mit Argon, gefüllt ist. Anstatt von Argon kann ggf. auch ein anderes Gas als drittes Gas genutzt werden, wie z.B. Helium. Darüber hinaus ist ein Generator 10 vorgesehen, der je nach Betriebsmodus reinen Stickstoff oder Druckluft generieren kann. Der Generator wird bedarfsweise in Betrieb gesetzt, um aus Umgebungsluft Stickstoff zu generieren, mit dem über die Leitung L101 das Reservoir 7 befüllt wird, bzw. um aus Umgebungsluft Druckluft zu generieren, mit der über die Leitung L201 das Reservoir 8 befüllt wird. Die Gase in den einzelnen Reservoirs 7, 8 und 9 stehen unter hohem Druck, der beispielsweise im Bereich von 40 bar liegt, jedoch auch sehr viel höher sein kann (z.B. 200 bar).

Die Vorrichtung gemäß Fig. 2 umfasst ferner einen Mischeinrichtung 6, welcher Stickstoff aus dem Reservoir 7 mittels der Leitungen L102 und L103, Druckluft aus dem Reservoir 8 mittels der Leitung L202 und das dritte Gas aus dem Reservoir 9 mittels der Leitung L301 zugeführt werden kann. In Mischgasbetrieb der Vorrichtung wird der Mischeinrichtung 6 zumindest Stickstoff aus dem Reservoir 7 und Druckluft aus dem Reservoir 8 zugeführt. Die Zuführung von drittem Gas aus dem Reservoir 9 ist im Mischgasbetrieb optional. Mit der Mischeinrichtung kann die Mischung der zugeführten Gase im Mischgasbetrieb eingestellt werden. Die Einstellung des Mischverhältnisses des Mischgases kann über eine Mensch-Maschine-Schnittstelle erfolgen bzw. ggf. auch automatisch geregelt werden.

Die der Mischeinrichtung 6 zugeführte Druckluft besteht üblicherweise aus einem Gemisch von 78,08 % Stickstoff, 20,95 % Sauerstoff und 0,97 % Restgase. Der Anteil an zugeführtem Sauerstoff ist somit um den Faktor 4,77 geringer als im Falle, dass über die Leitung L202 reiner Sauerstoff zugeführt wird. Demzufolge kann eine Gasmischung mit einem deutlich geringeren Anteil aus Sauerstoff generiert werden. Wird herkömmlicherweise bei der Zuführung von reinem Sauerstoff z.B. ein Mischverhältnis in einer entsprechenden Mischeinrichtung mit 1 % Sauerstoff eingestellt, kann mit dieser Einstellung bei der Zuführung von Druckluft anstatt von Sauerstoff ein Mischverhältnis mit 0,2 % Sauerstoff erreicht werden. Es können somit auf einfache Weise Mischverhältnisse des Mischgases mit einem Sauerstoffanteil von 0,5 % und weniger ermöglicht werden, die bei der Zuführung von reinem Sauerstoff nicht eingestellt werden können.

In der Ausführungsform der Fig. 2 ist die Mischeinrichtung 6 außerhalb des Laserbearbeitungsbereichs 1 bzw. des Gehäuses 2 angeordnet. Im Mischgasbetrieb wird das über die Mischeinrichtung 6 gemischte Gas (MX) über eine Leitung L401 zu einer Vorreguliereinheit 12 und von dort über eine Leitung L402 zu einer Einstelleinheit 11 geführt. An der Vorreguliereinheit ist ferner die vom Stickstoff-Reservoir 7 stammende Leitung L102 sowie eine Leitung L501 angeschlossen, wobei die Leitung L501 zu einem separaten Reservoir 13 führt, das mit reinem Sauerstoff befüllt ist. Die Leitung L102 führt über die Vorreguliereinheit 12 zur Leitung L104, die an der Einstelleinheit 11 angeschlossen ist. Demgegenüber führt die Leitung L501 über die Vorreguliereinheit 12 zur Leitung L502, die ebenfalls an der Einstelleinheit 11 angeschlossen ist. Über die Vorreguliereinheit 12 wird der Druck des Gases auf den entsprechenden Leitungen L502, L104 und L402 geeignet reduziert.

Sowohl die Vorreguliereinheit 12 als auch die Einstelleinheit 11 sind innerhalb des Laserbearbeitungsbereichs 1 der Laserbearbeitungsmaschine 100 angeordnet, so dass diese Komponenten Bestandteil der Laserbearbeitungsmaschine sind. Die Einstelleinheit 11 ist direkt am verfahrbaren Wagen 110 der Fig. 1 angeordnet, d.h. sie bewegt sich zusammen mit diesem. Demgegenüber ist die Vorreguliereinheit 12 ein stationäres Bauteil im Laserbearbeitungsbereich 1. Die Einstelleinheit 11 ist ein kompaktes Gerät, das elektronisch den Druck verschiedener Gase regelt und über eine geeignete Mensch-Maschinen-Schnittstelle der Vorrichtung gesteuert wird.

Die Einstelleinheit 11 umfasst drei Vorschaltventile für die einzelnen Leitungen L402, L104 und L502 sowie einen Proportionaldruckregler. Über die Vorschaltventile wird ausgewählt, aus welcher Leitung Gas über die Einstelleinheit der weiteren Leitung L600 und damit dem Gaseinlass 3 am Laserbearbeitungskopf 111 zugeführt wird. Mit anderen Worten wird über die Vorschaltventile das zu verwendende Bearbeitungsgas (Mischgas MX oder Stickstoff N2 oder Sauerstoff O2) entsprechend dem gewünschten Laserbearbeitungsprozess ausgewählt. Neben der Auswahl der entsprechenden Leitung und damit des Bearbeitungsgases regelt die Einstelleinheit 11 ferner den Druck des am Werkstück eingeleiteten Bearbeitungsgases, der je nach Laserbearbeitungsprozess geeignet eingestellt werden kann.

Optional kann die Vorrichtung der Fig. 2 auch derart ausgestaltet sein, dass ein Laserbearbeitungsprozess ausschließlich mit Druckluft aus dem Reservoir 8 als Bearbeitungsgas durchgeführt wird. In diesem Fall ist eine nicht gezeigte Bypassleitung vorgesehen, die unter Umgehung der Mischeinrichtung 6 vom Ende der Leitung 202 zum Anfang der Leitung L401 führt. Bei einem solchen Laserbearbeitungsprozess wird die Druckluft aus dem Reservoir 8 über die Bypassleitung geführt und gelangt dann über die Leitungen L401, L402 und L600 zum Gaseinlass 3 am Laserbearbeitungskopf 111.

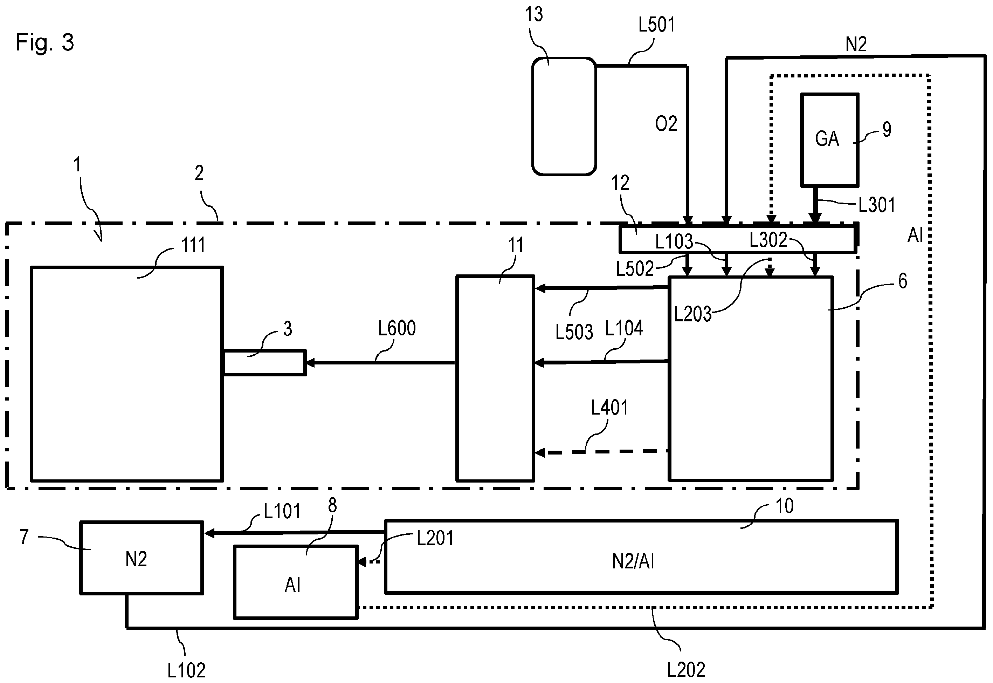

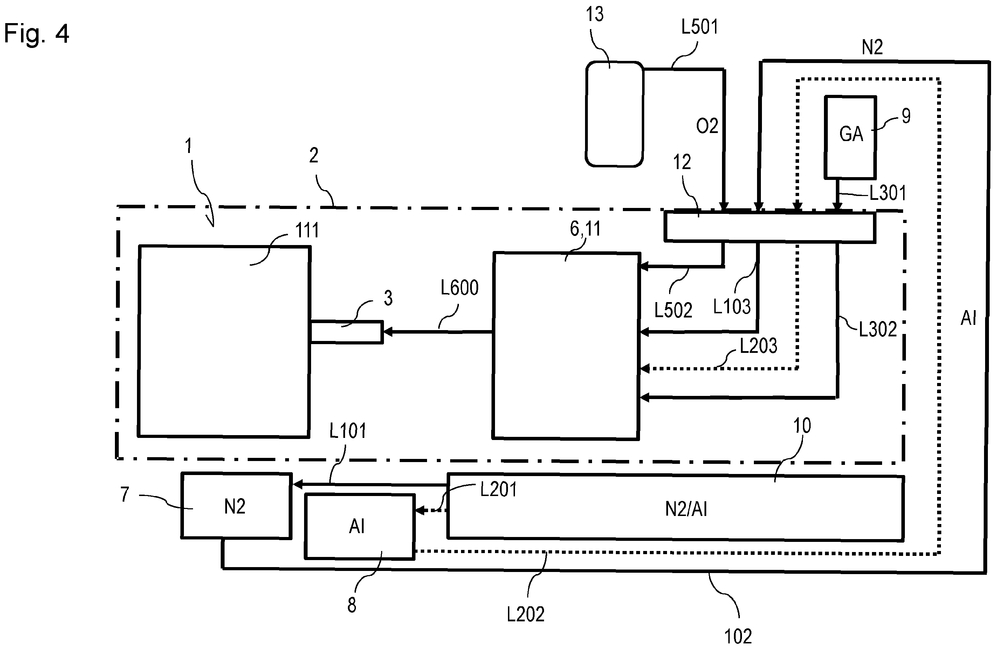

Fig. 3 und Fig. 4 zeigen abgewandelte Ausführungsformen der Vorrichtung zur Laserbearbeitung gemäß Fig. 2. Gleiche bzw. einander entsprechende Bauteile sind in Fig. 3 und Fig. 4 mit gleichen Bezugszeichen wie in Fig. 2 bezeichnet und werden nicht nochmals im Detail erläutert.

Die Ausführungsform der Fig. 3 unterscheidet sich von der Variante der Fig. 2 dahingehend, dass die Mischeinrichtung 6 nunmehr innerhalb des Gehäuses 2 angeordnet ist und somit Bestandteil der Laserbearbeitungsmaschine 100 ist. Hierdurch kann ein kompakter Aufbau der Vorrichtung erreicht werden. Ferner wird durch die Anordnung der Mischeinrichtung 6 in der Laserbearbeitungsmaschine der Weg vom Mischbereich zum Laserbearbeitungskopf minimiert und hierdurch der Laserbearbeitungsprozess optimiert. Konkret befindet sich die Mischeinrichtung 6 nunmehr in Richtung des Gasflusses hinter der Vorreguliereinheit 12. Sowohl die Vorreguliereinheit als auch die Mischeinrichtung sind stationäre Bauteile innerhalb des Laserbearbeitungsbereichs 1, wohingegen die Einstelleinheit 11 analog zur Ausführungsform der Fig. 2 direkt am verfahrbaren Wagen 110 angeordnet ist und sich mit diesem bewegt.

Im Mischgasbetrieb gelangt der Stickstoff aus dem Reservoir 7 über die Leitung L102, die Vorreguliereinheit 12 und die Leitung L103 in die Mischeinrichtung 6. Ferner gelangt in diesem Betriebsmodus die Druckluft aus dem Reservoir 8 über die Leitung L202, die Vorreguliereinheit 12 und die Leitung L203 in die Mischeinrichtung. Optional kann im Mischgasbetrieb ferner das dritte Gas aus dem Reservoir 9 über die Leitung L301, die Vorreguliereinheit 12 und die Leitung L302 in die Mischeinrichtung eingeleitet werden. Gemäß Fig. 3 ist an der Mischeinrichtung 6 ferner das Reservoir 13 mit reinem Sauerstoff über die Leitung L501, die Vorreguliereinheit 12 und die Leitung L502 angeschlossen.

Die Mischeinrichtung 6 der Fig. 3 ist derart ausgestaltet, dass dieser unter Umgehung der Gasmischung im Mischgasbetrieb auch nur Gas aus einer einzelnen der Leitungen L502, L103 und L203 zugeführt werden kann, wodurch neben dem Mischgasbetrieb auch eine Laserbearbeitung mit reinem Sauerstoff bzw. mit reinem Stickstoff bzw. nur mit Druckluft ermöglicht wird. Hierzu sind in der Mischeinrichtung 6 vorzugsweise Ventile am Ende der jeweiligen Leitungen L502, L103, L203 und L302, ggf. in Kombination mit in der Mischeinrichtung angeordneten Bypassleitungen, vorgesehen. Die Bypassleitungen stellen dabei eine direkte Verbindung zwischen den Leitungen L502 und L503 bzw. zwischen den Leitungen 103 und L104 bzw. zwischen den Leitungen L203 und L401 her. In der Ausführungsform der Fig. 3 kann ggf. auf die Integration von Vorschaltventilen in der Einstelleinheit 11 verzichtet werden, da entsprechende Ventile zur Auswahl der Leitungen bereits in der Mischeinrichtung 6 integriert sein können.

In der Ausführungsform der Fig. 3 kann die Mischeinrichtung 6 ggf. auch Komponenten von anderen Bauteilen nutzen, die bereits in der Laserbearbeitungsmaschine vorhanden sind, so dass die Mischeinrichtung einfacher aufgebaut sein kann und in der Größe reduziert werden kann. Zum Beispiel können Druckregler, die in der Vorreguliereinheit 12 verbaut sind, im Rahmen der Gasmischung von der Mischeinrichtung 6 genutzt werden.

Wie oben erwähnt, gelangt im Mischgasbetrieb der Fig. 3 sowohl Stickstoff als auch Druckluft über die Leitungen L103 bzw. L203 in die Mischeinrichtung 6, wobei ggf. über die Leitung L302 auch das dritte Gas zugeführt werden kann. Die Mischeinrichtung 6 bewirkt die geeignete Gasmischung und anschließend wird das Mischgas über die Leitung L401 der am verfahrbaren Wagen 110 vorgesehenen Einstelleinheit 11 zugeführt, die das Gas über die Leitung L600 zum Gaseinlass 3 des Laserbearbeitungskopfs 111 leitet. Demgegenüber gelangt im Falle einer Laserbearbeitung mit reinem Sauerstoff ausschließlich Sauerstoff über die Leitung L503 zu der Einstelleinheit 11 und von dort über die Leitung L600 zum Gaseinlass 3. Im Falle einer Laserbearbeitung ausschließlich mit Stickstoff wird nur über die Leitung L104 das Stickstoffgas zur Einstelleinheit 11 und von dort über die Leitung L600 zum Gaseinlass 3 am Laserbearbeitungskopf 111 geführt. Bei einer Laserbearbeitung ausschließlich mit Druckluft wird über die Leitung L401 nur Druckluft zur Einstelleinheit 11 und von dort über die Leitung L600 zum Gaseinlass 3 am Laserbearbeitungskopf 111 geführt.

Fig. 4 zeigt eine Abwandlung der Ausführungsform der Fig. 3. Die Ausführungsform der Fig. 4 entspricht größtenteils der Ausführungsform der Fig. 3, so dass auf eine detaillierte Beschreibung der Fig. 4 verzichtet wird. Der wesentliche Unterschied zwischen den Vorrichtungen der Fig. 3 und Fig. 4 besteht darin, dass die Mischeinrichtung 6 und die Einstelleinheit 11 in der Vorrichtung der Fig. 4 nunmehr in einem einzelnen Bauteil bzw. Modul integriert sind, das kompakt aufgebaut ist und am verfahrbaren Laserbearbeitungskopf 11 angeordnet ist. Auf diese Weise wird ein besonders platzsparender Aufbau erreicht.

Durch die Integration der Mischeinrichtung 6 und der Einstelleinheit 11 in einem einzelnen Bauteil sind aus Fig. 4 nicht mehr die Leitungen L503, L104 und L401 ersichtlich, die nunmehr innerhalb des Bauteils verbaut sind. Ansonsten werden mit der Ausführungsform der Fig. 4 die gleichen Betriebsmodi wie in der Ausführungsform der Fig. 3 realisiert, d.h. es kann eine Laserbearbeitung mit einem Mischgas beinhaltend Stickstoff und Druckluft (optional mit dem dritten Gas), mit reinem Sauerstoff, mit reinem Stickstoff bzw. ausschließlich mit Druckluft durchgeführt werden. Diesbezüglich wird auf die Erläuterungen zur Ausführungsform der Fig. 3 verwiesen.

Die im Vorangegangenen beschriebenen Ausführungsformen der Erfindung weisen eine Reihe von Vorteilen auf. Insbesondere wird in einer Vorrichtung zur Laserbearbeitung ein Mischgasbetrieb ermöglicht, bei dem Mischgas beinhaltend Stickstoff und Sauerstoff mit einem sehr geringen Anteil an Sauerstoff, insbesondere von 0,5 % oder weniger, vorzugsweise von 0,2 % oder weniger, besonders bevorzugt von 0,1 % oder weniger, zur Laserbearbeitung genutzt wird. Dies wird dadurch erreicht, dass zur Gasmischung kein reiner Sauerstoff, sondern Druckluft verwendet wird. Eine Laserbearbeitung mit einem derart geringen Anteil an Sauerstoff hat besondere Vorteile, wenn dicke Werkstücke bearbeitet bzw. geschnitten werden und somit eine hohe Laserleistung benötigt wird. Einen sehr großen Nutzen hat die Erfindung bei Laserleistungen ab 15 kW, jedoch kann die Erfindung auch schon bei geringeren Leistungen, wie z.B. ab 2 kW, zum Einsatz kommen.

### Bezugszeichenliste

- 1: Laserbearbeitungsbereich
- 2: Gehäuse (strichpunktierte Linie)
- 3: Gaseinlas
- 6: Mischeinrichtung
- 7: erstes Reservoir
- 8: zweites Reservoir
- 9: drittes Reservoir
- 10: Generator
- 11: Einstelleinheit
- 12: Vorrreguliereinheit
- 13: Sauerstoffreservoir
- 100: Laserbearbeitungsmaschine
- 110: verfahrbarer Wagen (Schneidwagen)
- 111: Laserbearbeitungskopf (Laserschneidkopf)
- 112: Brücke
- 113: Traverse
- 114: Brückenfuß
- 115: Brückenfuß
- 120: Maschinenrahmen
- 121: Führung
- 122: Führung
- 130: Werkstück
- LS: Laserstrahl
- x: erste Richtung (Längsrichtung)
- y: zweite Richtung (Querrichtung)
- z: dritte Richtung (Höhenrichtung)
- N2: Stickstoff
- AI: Druckluft
- GA: drittes Gas (Argon)
- MX: Mischgas
- O2: Sauerstoff
- L101, L102, L103, L104: Stickstoff-Leitungen (durchgezogene Linien)
- L201, L202, L203: Druckluft-Leitungen (gepunktete Linien)
- L301, L302: Leitungen für drittes Gas (durchgezogene Linien)
- L401, L402: Mischgas-Leitungen (gestrichelte Linien)
- L501, L502, L503: Sauerstoff-Leitungen (durchgezogene Linien)
- L600: Leitung zwischen Einstelleinheit 11 und Laserbearbeitungskopf 111 (durchgezogene Linie)

## Patentansprüche

1. Vorrichtung zur Laserbearbeitung eines Werkstücks (130), insbesondere zum Laserschneiden des Werkstücks (130), beinhaltend eine Gaszufuhreinrichtung, zumindest zwei Reservoirs (7, 8) und eine Laserbearbeitungsmaschine (100), die in einem Laserbearbeitungsbereich (1) einen bewegbaren Laserbearbeitungskopf (111) enthält, um die Laserbearbeitung des Werkstücks (130) im Laserbearbeitungsbereich (1) durch Richten eines Laserstrahls (LS) auf das Werkstück (130) durchzuführen,
wobei der Laserbearbeitungskopf (111) einen Gaseinlass (3) umfasst, um in einem Mischgasbetriebsmodus ein Mischgas (MX) beinhaltend Stickstoff (N2) und Sauerstoff (O2) während der Laserbearbeitung als Bearbeitungsgas am Werkstück (130) einzuleiten,
wobei der Gaseinlass (3) mit der Gaszufuhreinrichtung verbunden ist, welche eine Mischeinrichtung (6) umfasst, die dazu konfiguriert ist, im Mischgasbetriebsmodus das Mischgas (MX) aus den zumindest zwei Reservoirs (7, 8) umfassend ein erstes Reservoir (7) zum Befüllen mit komprimiertem Stickstoff (N2) und ein zweites Reservoir (8) zum Befüllen mit komprimierter Druckluft (AI) zu mischen,
wobei die Vorrichtung einen Generator (10) umfasst, der zum Betrieb in einem Betriebsmodus eingerichtet ist, in dem der Generator (10) aus Umgebungsluft komprimierte Druckluft (AI) generiert und dem zweiten Reservoir (8) zuführt, und der zum Betrieb in einem weiteren Betriebsmodus eingerichtet ist, in dem der Generator (10) aus Umgebungsluft komprimierten Stickstoff (N2) generiert und dem ersten Reservoir (7) zuführt.

2. Vorrichtung nach Anspruch 1, **dadurch gekennzeichnet, dass** die Mischeinrichtung (6) derart betreibbar ist, dass das Mischverhältnis des Mischgases (MX) im Mischgasbetriebsmodus einen Anteil von 0,5 % oder weniger, vorzugsweise von 0,2 % oder weniger, besonders bevorzugt von 0,1 % oder weniger, an Sauerstoff (O2) enthält.

3. Vorrichtung nach Anspruch 1 oder 2, **dadurch gekennzeichnet, dass** das Mischverhältnis des Mischgases (MX) mittels der Mischeinrichtung (6) einstellbar ist.

4. Vorrichtung nach einem der vorhergehenden Ansprüche, **dadurch gekennzeichnet, dass** die Mischeinrichtung (6) derart betreibbar ist, dass im Mischgasbetriebsmodus zumindest ein weiteres Gas (GA) neben Stickstoff (N2) und Druckluft (AI) aus zumindest einem dritten Reservoir (9) dem Mischgas beigemischt wird.

5. Vorrichtung nach einem der vorhergehenden Ansprüche, **dadurch gekennzeichnet, dass** Mischeinrichtung (6) im Laserbearbeitungsbereich (1) angeordnet ist, vorzugsweise innerhalb eines Gehäuses (2), das den Laserbearbeitungsbereich (1) umgibt.

6. Vorrichtung nach einem der Ansprüche 1 bis 4, **dadurch gekennzeichnet, dass** Mischeinrichtung (6) außerhalb des Laserbearbeitungsbereichs (1) angeordnet ist, vorzugsweise außerhalb eines Gehäuses (2), das den Laserbearbeitungsbereich (1) umgibt.

7. Vorrichtung nach einem der vorhergehenden Ansprüche, **dadurch gekennzeichnet, dass** die Gaszufuhreinrichtung eine Einstelleinheit (11) umfasst, um den Druck des Mischgases (MG) am Gaseinlass (3) einzustellen.

8. Vorrichtung nach Anspruch 7, **dadurch gekennzeichnet, dass** die Einstelleinheit (11) benachbart zum Laserbearbeitungskopf (111) angeordnet ist und mit diesem bewegbar ist.

9. Vorrichtung nach Anspruch 7 oder 8, **dadurch gekennzeichnet, dass** die Mischeinrichtung (6) in der Einstelleinheit (11) integriert ist.

10. Vorrichtung nach einem der vorhergehenden Ansprüche, **dadurch gekennzeichnet, dass** die Vorrichtung dazu konfiguriert ist, in einem oder mehreren anderen Betriebsmodi als dem Mischgasbetriebsmodus betrieben zu werden, wobei in einem jeweiligen anderen Betriebsmodus als Bearbeitungsgas ausschließlich ein anderes Gas (N2, O2) als das Mischgas (MX) über den Gaseinlass (3) oder einen anderen Gaseinlass am Laserbearbeitungskopf (111) am Werkstück eingeleitet wird.

11. Vorrichtung nach Anspruch 10, **dadurch gekennzeichnet, dass** der oder die anderen Betriebsmodi einen Betriebsmodus zum Einleiten von Stickstoff (N2) als Bearbeitungsgas aus dem ersten Reservoir (7) am Werkstück (130) und/oder einen Betriebsmodus zum Einleiten von Druckluft (AI) als Bearbeitungsgas aus dem zweiten Reservoir (8) am Werkstück (130) und/oder einen Betriebsmodus zum Einleiten von Sauerstoff (O2) als Bearbeitungsgas aus einem Sauerstoff-Reservoir (13) am Werkstück (130) umfassen.

12. Verfahren zur Laserbearbeitung eines Werkstücks (130), insbesondere zum Laserschneiden des Werkstücks (130), bei dem eine Vorrichtung nach einem der Ansprüche 1 bis 11 verwendet wird, und in einem Laserbearbeitungsbereich (1) der bewegbare Laserbearbeitungskopf (111) der Laserbearbeitungsmaschine (100) die Laserbearbeitung des Werkstücks (130) durch Richten eines Laserstrahls (LS) auf das Werkstück (130) durchführt,
wobei in dem Mischgasbetriebsmodus über den
Gaseinlass (3) des Laserbearbeitungskopfs (111) ein Mischgas (MX) beinhaltend Stickstoff (N2) und Sauerstoff (O2) während der Laserbearbeitung als Bearbeitungsgas am Werkstück (130) eingeleitet wird,
wobei im Mischgasbetriebsmodus mittels der Mischeinrichtung (6), die Bestandteil der mit dem Gaseinlass (3) verbunden Gaszufuhreinrichtung ist, das Mischgas (MX) aus zumindest den zwei Reservoirs (7, 8) umfassend das erste Reservoir (7) befüllt mit komprimiertem Stickstoff (N2) und das zweite Reservoir (8) befüllt mit komprimierter Druckluft (AI) gemischt wird.

## Claims

1. A device for laser processing a workpiece (130), in particular for laser cutting the workpiece (130), including a gas supply device, at least two reservoirs (7, 8), and a laser processing machine (100) that includes a movable laser processing head (111) in a laser processing region (1) in order to carry out the laser processing of the workpiece (130) in the laser processing region (1) by directing a laser beam (LS) onto the workpiece (130), wherein the laser processing head (111) comprises a gas inlet (3) for introducing a mixed gas (MX) containing nitrogen (N2) and oxygen (O2) onto the workpiece (130) as a processing gas during the laser processing in a mixed gas operating mode,
wherein the gas inlet (3) is connected to the gas supply device which comprises a mixing device (6) that is configured to mix the mixed gas (MX) from the at least two reservoirs (7, 8) comprising a first reservoir (7) for filling with compressed nitrogen (N2) and a second reservoir (8) for filling with compressed air (AI) in the mixed gas operating mode,
wherein the device comprises a generator (10) that is configured to operate in an operating mode in which the generator (10) generates compressed air (AI) from ambient air and supplies it to the second reservoir (8), and which is configured to operate in a further operating mode in which the generator (10) generates compressed nitrogen (N2) from ambient air and supplies it to the first reservoir (7).

2. The device according to claim 1, **characterized in that** the mixing device (6) can be operated such that, in the mixed gas operating mode, the mixing ratio of the mixed gas (MX) contains a portion of 0.5% or less, preferably 0.2% or less, particularly preferably 0.1% or less, of oxygen (O2).

3. The device according to claim 1 or 2, **characterized in that** the mixing ratio of the mixed gas (MX) can be adjusted by means of the mixing device (6).

4. The device according to any one of the preceding claims, **characterized in that** the mixing device (6) can be operated such that, in mixed gas operating mode, at least one additional gas (GA), in addition to nitrogen (N2) and compressed air (AI), is added to the mixed gas from at least one third reservoir (9).

5. The device according to any one of the preceding claims, **characterized in that** the mixing device (6) is arranged in the laser processing region (1), preferably within a housing (2) that surrounds the laser processing region (1).

6. The device according to any one of claims 1 to 4, **characterized in that** the mixing device (6) is arranged outside of the laser processing region (1), preferably outside of a housing (2) that surrounds the laser processing region (1).

7. The device according to any one of the preceding claims, **characterized in that** the gas supply device comprises an adjustment unit (11) for adjusting the pressure of the mixed gas (MG) at the gas inlet (3).

8. The device according to claim 7, **characterized in that** the adjustment unit (11) is arranged adjacent to the laser processing head (111) and is movable therewith.

9. The device according to claim 7 or 8, **characterized in that** the mixing device (6) is integrated into the adjustment unit (11).

10. The device according to any one of the preceding claims, **characterized in that** the device is configured to operate in one or more operating modes other than the mixed gas operating mode, wherein, in a respective other operating mode, only a different gas (N2, O2) other than the mixed gas (MX) is introduced as a processing gas to the workpiece via the gas inlet (3) or another gas inlet on the laser processing head (111).

11. The device according to claim 10, **characterized in that** the other operating mode(s) comprise(s) an operating mode for the introduction of nitrogen (N2) as a processing gas from the first reservoir (7) onto the workpiece (130) and/or an operating mode for the introduction of compressed air (AI) as a processing gas from the second reservoir (8) onto the workpiece (130) and/or an operating mode for the introduction of oxygen (O2) as a processing gas from an oxygen reservoir (13) onto the workpiece (130).

12. A method for laser processing a workpiece (130), in particular for laser cutting the workpiece (130), in which a device according to any one of claims 1 to 11 is used, and in a laser processing region (1) the movable laser processing head (111) of the laser processing machine (100) carries out the laser processing of the workpiece (130) by directing a laser beam (LS) onto the workpiece (130),
wherein, in the mixed gas operating mode, a mixed gas (MX) containing nitrogen (N2) and oxygen (O2) is introduced through the gas inlet (3) of the laser processing head (111) onto the workpiece (130) as a processing gas during the laser processing,
wherein, in the mixed gas operating mode, by means of the mixing device (6), which is part of the gas supply device connected to the gas inlet (3), the mixed gas (MX) is mixed from at least the two reservoirs (7, 8), comprising the first reservoir (7) filled with compressed nitrogen (N2) and the second reservoir (8) filled with compressed air (AI).

## Revendications

1. Dispositif d'usinage laser d'une pièce (130), en particulier de découpe laser de la pièce (130), contenant un équipement d'alimentation en gaz, au moins deux réservoirs (7, 8) et une machine d'usinage laser (100) qui inclut une tête d'usinage laser (111) mobile dans une zone d'usinage laser (1) afin de réaliser l'usinage laser de la pièce (130) dans la zone d'usinage laser (1) en dirigeant un faisceau laser (LS) sur la pièce (130),
dans lequel la tête d'usinage laser (111) comprend une entrée de gaz (3) pour introduire un gaz mixte (MX) contenant de l'azote (N2) et de l'oxygène (O2) comme gaz d'usinage sur la pièce (130) pendant l'usinage laser dans un mode de fonctionnement à gaz mixte,
dans lequel l'entrée de gaz (3) est reliée à l'équipement d'alimentation en gaz qui comprend un équipement de mélange (6), qui est configuré pour mélanger le gaz mixte (MX) provenant des au moins deux réservoirs (7, 8) comprenant un premier réservoir (7) destiné au remplissage d'azote (N2) comprimé et un deuxième réservoir (8) destiné au remplissage d'air comprimé (AI) dans le mode de fonctionnement à gaz mixte,
le dispositif comprenant un générateur (10) qui est conçu pour fonctionner dans un mode de fonctionnement dans lequel le générateur (10) génère de l'air comprimé (AI) à partir de l'air ambiant et l'achemine vers le deuxième réservoir (8), et qui est conçu pour fonctionner dans un autre mode de fonctionnement dans lequel le générateur (10) génère de l'azote (N2) comprimé à partir de l'air ambiant et l'achemine vers le premier réservoir (7).

2. Dispositif selon la revendication 1, **caractérisé en ce que** l'équipement de mélange (6) peut être amené à fonctionner de manière à ce que le rapport de mélange du gaz mixte (MX) dans le mode de fonctionnement à gaz mixte inclut une proportion inférieure ou égale à 0,5 %, de préférence inférieure ou égale à 0,2 %, et de manière particulièrement préférée inférieure ou égale à 0,1 %, d'oxygène (O2).

3. Dispositif selon la revendication 1 ou 2, **caractérisé en ce que** le rapport de mélange du gaz mixte (MX) est réglable au moyen de l'équipement de mélange (6).

4. Dispositif selon l'une quelconque des revendications précédentes, **caractérisé en ce que** l'équipement de mélange (6) peut être amené à fonctionner de manière à ce que, dans le mode de fonctionnement à gaz mixte, au moins un autre gaz (GA) soit ajouté au gaz mixte en plus de l'azote (N2) et de l'air comprimé (AI) provenant d'au moins un troisième réservoir (9).

5. Dispositif selon l'une quelconque des revendications précédentes, **caractérisé en ce que** l'équipement de mélange (6) est agencé dans la zone d'usinage laser (1), de préférence à l'intérieur d'un boîtier (2) qui entoure la zone d'usinage laser (1).

6. Dispositif selon l'une des revendications 1 à 4, **caractérisé en ce que** l'équipement de mélange (6) est agencé à l'extérieur de la zone d'usinage laser (1), de préférence à l'extérieur d'un boîtier (2) qui entoure la zone d'usinage laser (1).

7. Dispositif selon l'une quelconque des revendications précédentes, **caractérisé en ce que** l'équipement d'alimentation en gaz comprend une unité de réglage (11) pour régler la pression du gaz mixte (MG) à l'entrée de gaz (3).

8. Dispositif selon la revendication 7, **caractérisé en ce que** l'unité de réglage (11) est agencée adjacente à la tête d'usinage laser (111) et est mobile avec elle.

9. Dispositif selon la revendication 7 ou 8, **caractérisé en ce que** l'équipement de mélange (6) est intégré dans l'unité de réglage (11).

10. Dispositif selon l'une quelconque des revendications précédentes, **caractérisé en ce que** le dispositif est configuré pour fonctionner dans un ou plusieurs modes de fonctionnement autres que le mode de fonctionnement à gaz mixte, dans lequel dans un autre mode de fonctionnement respectif seul un gaz (N2, O2) autre que le gaz mixte (MX) est introduit comme gaz d'usinage par l'intermédiaire de l'entrée de gaz (3) ou d'une autre entrée de gaz sur la tête d'usinage laser (111) au niveau de la pièce.

11. Dispositif selon la revendication 10, **caractérisé en ce que** le ou les autres modes de fonctionnement comprennent un mode de fonctionnement pour l'introduction d'azote (N2) comme gaz d'usinage à partir du premier réservoir (7) sur la pièce (130) et/ou un mode de fonctionnement pour l'introduction d'air comprimé (AI) comme gaz d'usinage à partir du deuxième réservoir (8) sur la pièce (130) et/ou un mode de fonctionnement pour l'introduction d'oxygène (O2) comme gaz d'usinage à partir d'un réservoir d'oxygène (13) sur la pièce (130).

12. Procédé d'usinage laser d'une pièce (130), en particulier de découpe laser de la pièce (130), dans lequel un dispositif selon l'une des revendications 1 à 11 est utilisé, et
dans une zone d'usinage laser (1), la tête d'usinage laser (111) mobile de la machine d'usinage laser (100) réalise l'usinage laser de la pièce (130) en dirigeant un faisceau laser (LS) sur la pièce (130),
dans lequel, dans le mode de fonctionnement à gaz mixte, un gaz mixte (MX) contenant de l'azote (N2) et de l'oxygène (O2) est introduit comme gaz d'usinage au niveau de la pièce (130) par l'intermédiaire de l'entrée de gaz (3) de la tête d'usinage laser (111) pendant l'usinage laser,
dans lequel, dans le mode de fonctionnement à gaz mixte, le gaz mixte (MX) est mélangé, au moyen de l'équipement de mélange (6), qui fait partie de l'équipement d'alimentation en gaz relié à l'entrée de gaz (3), à partir des au moins deux réservoirs (7, 8) comprenant le premier réservoir (7) rempli d'azote (N2) comprimé et le deuxième réservoir (8) rempli d'air comprimé (AI).
